# EUROPÄISCHE PATENTSCHRIFT

(11) **EP 3 345 713 B1**
(45) Veröffentlichungstag und Bekanntmachung des Hinweises auf die Patenterteilung: **21.06.2023**
(21) Anmeldenummer: 18150015.8
(22) Anmeldetag: 02.01.2018
(51) Int. Cl.: B23K 26/064, B23K 26/073

(54) **VERFAHREN UND VORRICHTUNG ZUR PROZESSORIENTIERTEN STRAHLFORMANPASSUNG UND STRAHLORIENTIERUNG**
METHOD AND DEVICE FOR PROCESS-ORIENTED BEAM SHAPE ADJUSTMENT AND BEAM ORIENTATION
PROCÉDÉ ET DISPOSITIF D'AJUSTEMENT DE FORMATION DE JET ET D'ORIENTATION DE JET ORIENTÉS PROCESSUS

(30) Priorität: 05.01.2017 DE 102017200119
(43) Veröffentlichungstag der Anmeldung: 11.07.2018
(73) Patentinhaber: Robert Bosch GmbH, 70442 Stuttgart (DE)
(72) Erfinder: Mikhaylov, Dmitriy, 71272 Renningen (DE); Kroschel, Alexander, 71272 Renningen (DE); Ramsayer, Reiner, 71277 Rutesheim (DE); Shakirov, Damir, 75203 Koenigsbach-Stein (DE); Ilin, Alexander, 71642 Ludwigsburg (DE); Kiedrowski, Thomas, 74372 Sersheim (DE)

(56) Entgegenhaltungen:
- WO-A1-2005/080044
- WO-A1-2007/000194
- WO-A1-2013/164125
- WO-A2-01/09660
- DE-A1-102011 116 833
- JP-A- H08 286 145
- US-A- 5 483 342

## Beschreibung

### Stand der Technik

Die Erfindung betrifft ein Verfahren zur Strahlform- und Strahlorientierungsanpassung bei einem Laserbearbeitungsprozess, bei dem in einer Laserbearbeitungsanlage ein Laserstrahl mittels Umlenkspiegeln und Linsensystemen auf die Oberfläche eines Bauteils fokussiert und der Laserstrahl mittels mindestens eines Strahlformungsmoduls hinsichtlich seiner Intensitätsverteilung an die zu bearbeitende Oberfläche des Bauteils angepasst werden kann.

Die Erfindung betrifft weiterhin eine Vorrichtung, insbesondere eine Laserbearbeitungsanlage mit einer Prozesssteuereinheit zur Durchführung des erfindungsgemäßen Verfahrens.

Die Intensitäts- bzw. Fluenzverteilung eines Laserstrahls in der Bearbeitungsebene spielt eine große Rolle für die Ergebnisse eines Laserbearbeitungsprozesses. Sie bildet somit einen wichtigen Parameter der Lasermaterialbearbeitung. Allerdings ist die Strahlform nicht einfach zu variieren, weswegen Laserstrahlen mit gaußförmigem Strahlprofil am häufigsten verwendet werden. Zur Strahlformung können feste Optiken, die diffraktive optische Elemente (DOE) genannt werden, im Strahlengang verbaut werden, die einen typischen gaußförmigen Strahl in unterschiedliche aber nicht veränderbare Strahlformen modifizieren. Solche DOEs haben den Vorteil, dass die Intensitätsverteilung des Laserstrahls in gewissen Grenzen nach Belieben eingestellt werden kann. Allerdings sind die DOEs feste Optiken, die während der Bearbeitung zwar ausgetauscht werden können (z.B. mittels eines DOE-Wechslers). Jedoch ist die Wechseldauer im Vergleich zur Prozessdauer meist zu lang, so dass die Umstellung der Intensitätsverteilung während der Bearbeitung nur für sehr unterschiedliche Geometrien und Parametersätze geeignet ist. Ferner sind die hohen Kosten der DOEs, die bis zu mehreren Tausend Euro/Stück reichen, zu nennen, die die Anzahl der eingesetzten DOEs pro Anlage begrenzen (Kosten/Nutzen-Rechnung und Wirtschaftlichkeit der Anlage). Kommen solche DOEs zum Einsatz, so sind es dann meist ein bis zwei Optiken, die nur für einen Prozess optimiert sind. Ein weiterer Nachteil der festen Strahlformer tritt dann auf, wenn diese in Kombination mit einem Scanner-System verwendet werden: Da ein Scanner-System darauf optimiert ist, einen einzelnen schmalen Laserstrahl auf der Bearbeitungsebene richtig zu positionieren (1D-Punkt) und alle systemtechnischen Verzerrungen auszugleichen, kann ein geformtes Strahlprofil in der Bearbeitungsebene (2D-Bild) eine Bildverzerrung erfahren. Vor allem bei Strahlteilung aber auch bei Strahlformung kann dies zur Minderung der Bearbeitungsqualität führen (Positioniergenauigkeit, Einhaltung der Toleranzen, Konstanz der Intensitätsverteilung usw.). Ferner sollen die flexiblen, frei programmierbaren Strahlformer genannt werden, wie Spatial Light Modulator (SLM), der räumliche Verteilung der Phase oder der Amplitude des Laserstrahls oder auch beide Größen zusammen variieren und gezielt einstellen kann. Solche Modulatoren funktionieren nach unterschiedlichen physikalischen Prinzipien, wie z.B. der Verwendung der doppelbrechenden Flüssigkristalle. Auch reine Amplitudenmodulatoren, die gezielt Bereiche im Laserstrahlprofil ausblenden (z.B. Digital Micro-Mirror Device) sind ebenfalls zu erwähnen. Solche Systeme sind bekannt und können zur Optimierung der Laserprozesse eingesetzt werden.

Die US 6,717,104 B2 beschreibt ein System zur Materialbearbeitung mittels Laserstrahlung bestehend aus einer Laserquelle, die einen Laserstrahl erzeugt, der zu einem Werkstück geleitet wird, einem Spatial Light Modulator SLM, der einzeln ansteuerbare Elemente zur Beeinflussung des Phasenprofils des Laserstrahls aufweist, um auf dem Werkstück eine zugehörige Intensitätsverteilung zu erzeugen, eine mit dem SLM verbundene Steuereinheit, um deren einzeln ansteuerbare Elemente anzusteuern, so dass das Phasenprofil des Laserstrahls derart eingestellt werden kann, dass ein gewünschtes Intensitätsprofil auf dem Werkstück erzielt wird, das für die beabsichtigte Materialbearbeitung geeignet ist. Weiterhin sind vor dem SLM und auf das Werkstück Sensoren gerichtet, die die Intensitätsverteilung erfassen und Daten an die Steuereinheit senden, auf deren Basis Abweichungen in der Phasenverteilung korrigiert werden.

Die US 8,957,349 B2 beschreibt eine Vorrichtung zur Materialbearbeitung mittels Laserstrahlung, die aus einer Laserquelle, einem SLM und einer Steuereinheit besteht. In der Steuereinheit ist eine Mehrzahl von Hologrammen gespeichert, die je nach Aufgabe bei der Materialbearbeitung aufgerufen und an den SLM weitergegeben werden.

Beim Laserbohren ist bekannt, dass ein Laserstrahl nicht nur auf dem Bohrdurchmesser geführt, sondern auch um seine eigene Achse gedreht werden kann. Dies führt dazu, dass die Asymmetrie des Strahlprofils eines verwendeten Laserstrahls ausgeglichen und zu einem symmetrischen Kreisprofil durch Mittelung werden kann. So kann die Rundheit der Bohrung erreicht werden. Um die Drehung des Strahlprofils beim Bohren zu gewährleisten, werden unterschiedliche Bohroptiken eingesetzt. Eine Strahlprofildrehung kann durch ein sogenanntes Dove-Prisma erzeugt werden. Weiterhin kann die Rotation eines Zylinderlinsenteleskops für eine Strahlprofildrehung genutzt werden. In beiden Fällen dreht das Strahlprofil mit der doppelten Winkelgeschwindigkeit der Bohroptik. Die Strahlprofilrotation ist somit an die drehende Bewegung des Wendelbohrens gekoppelt und kann nicht unabhängig vom Gesamtsystem erfolgen.

Das Dokument DE 10 2011 116 833 A1 offenbart eine Laserbearbeitungsmaschine, umfassend eine Laserquelle, dessen Strahl auf ein Werkstück ausrichtbar und zur Bearbeitung desselben vorgesehen ist, und Mittel zum Drehen des Laserstrahls um seine Strahlachse. Weder eine Anpassung der Strahlform noch gegenläufig drehende Dove-Prismen/Zylinderlinsenteleskopen werden hier erwähnt.

Die Schrift WO 2013/164125 A1 offenbart ein Verfahren zur Bearbeitung eines Werkstücks mit Laserstrahlung.

Das Dokument WO 2005/080044 A1 offenbart ein Verfahren zum Formen eines Laserstrahls, bei dem ein erster Laserstrahl mit einer ersten transversalen Intensitätsverteilung auf ein Strahlformungselement gerichtet wird und der erste Laserstrahl mittels des Strahlformungselements in einen zweiten Laserstrahl mit einer zweiten transversalen Intensitätsverteilung umgewandelt wird.

Es ist Aufgabe der Erfindung, ein Verfahren bereitzustellen, welches eine prozessorientierte Strahlformanpassung sowie eine optimale Anpassung der Orientierung des Bearbeitungsstrahls während der Laserbearbeitung, z.B. beim Laserschweißen, ermöglicht. Genauer gesagt, ist es die Aufgabe eine Laserstrahlprofilorientierung mit größerer Dynamik und hoher Präzision in Echtzeit an die Bearbeitungsgeschwindigkeit anzupassen, um eine optimierte Laserbearbeitung zu erreichen, beispielsweise um Bauteile mit ungleichmäßigen oder räumlich unterschiedlich orientierten Konturen mit hohen Bearbeitungsgeschwindigkeiten zu verschweißen.

Es ist weiterhin Aufgabe der Erfindung, eine entsprechende Vorrichtung, insbesondere eine Steuereinheit sowie ein Strahlformungsmodul und eine strahlprofildrehende Optik zur Durchführung des Verfahrens bereitzustellen.

### Offenbarung der Erfindung

Die das Verfahren betreffende Aufgabe wird durch die Merkmale der Ansprüche 1 bis 4 gelöst.

Erfindungsgemäß ist dabei vorgesehen, dass der Laserstrahl zusätzlich hinsichtlich seiner Orientierung mittels einer strahlprofildrehenden Optik während der Bearbeitung gedreht wird, wobei die Anpassung der Strahlform sowie die Drehung des Strahlprofils des Laserstrahls abhängig von der zu bearbeitenden Fläche des Bauteils als auch vom Vektor der Vorschubgeschwindigkeit angepasst werden. Hiermit wird ein neuer Parameterraum für eine Laserprozessoptimierung bereitgestellt. Gegenüber bestehenden Systemen, insbesondere gegenüber statisch aufgebauten Strahlformern kann eine dynamisch angepasste Strahlformung erzielt werden, so dass die Strahlformung in Echtzeit an die heute erreichbaren Bearbeitungsgeschwindigkeiten angepasst werden kann. Mit der Strahlform ist die räumliche Verteilung der Laserstrahlintensität bzw. der Fluenz in einer Bearbeitungsebene (Intensitätsverteilung in der xy-Ebene entlang der z-Achse als Strahlausbreitungsachse) gemeint. Sie beinhaltet auch die Strahlteilung. Die zusätzliche Anpassung der Strahlorientierung ermöglicht eine optimierte Laserbearbeitung insbesondere, wenn beispielsweise Bauteile mit ungleichmäßigen oder räumlich unterschiedlich orientierten Konturen verschweißt werden sollen. Der Laserstrahl wird erfindungsgemäß dem Vorschubvektor der Bearbeitungsgeschwindigkeit angepasst.

Besonders vorteilhaft ist es, wenn die Strahlformanpassung und Strahlprofildrehung des Laserstrahls frei programmiert oder in Abhängigkeit einer Scannersteuerung eines Scannersystems und/ oder einer Positionierachsensteuerung einer Bauteilpositionierung adaptiert wird, wobei eine Kommunikation zwischen Strahlformanpassung und Strahlprofildrehung mit der Scannersteuerung und/ oder der Achsensteuerung erfolgt.

Da viele Laserbearbeitungsprogramme meist vor der eigentlichen Bearbeitung entwickelt werden, ist es von Vorteil, wenn die Prozessparameter für die Strahlformanpassung und Strahlprofildrehung des Laserstrahls offline in Laserbearbeitungsprogramme integriert werden. Aber auch eine Online-Adaption an den Laserbearbeitungsprozess kann vorteilhaft sein, falls der Prozess, z.B. über eine entsprechende Sensorik, beobachtet bzw. überwacht, gesteuert oder geregelt wird. Bevorzugt wird die Strahlformanpassung und Strahlprofildrehung des Laserstrahls kontinuierlich oder in kurzen Zeitabständen während des Prozesses durchgeführt. Damit lassen sich Laserbearbeitungsprozesse ohne Pausieren des Prozesses realisieren, was einerseits die Laserbearbeitungszeit verkürzt und andererseits auch die Laserbearbeitungsqualität verbessert.

Erfindungsgemäß wird die Strahlformanpassung des Laserstrahls mittels einer SLM-Einheit (Spatial Light Modulator) im Strahlformungsmodul und die Strahlprofildrehung mit mehreren sich drehenden Prismen und/ oder Zylinderlinsenteleskopen durchgeführt. Sowohl die Strahlformung als auch die Strahlprofildrehung kann mit einer Dynamik erfolgen, die in der Größenordnung der Dynamik der Vorschubgeschwindigkeit bzw. der Änderung des Bearbeitungsvektors liegt. Damit lässt sich eine optimale, an den Laserbearbeitungsprozess angepasste Strahlformung und -orientierung erzielen.

Erfindungsgemäß wird die Strahlprofildrehung mittels sich gegenläufig drehender Dove-Prismen und/ oder Zylinderlinsenteleskope eingestellt. Hiermit lassen sich präzise und hochdynamische Strahltorientierungsanpassungen erzielen.

Eine bevorzugte Verwendung des Verfahrens, wie es zuvor mit seinen Varianten beschrieben wurde, sieht den Einsatz in Laserbearbeitungsanlagen zum Laserabtragen, sowie Laserbohren, Lasermarkieren, Laserreinigen, Laserlöten bzw. Laserschweißen und zum Laserpolieren vor. Durch die Erfindung ergibt sich hierbei der Vorteil der prozessangepassten Laserstrahlführung mit geformtem Laserstrahl und an den Vorschubvektor angepasster Orientierung des Laserstrahls, was insbesondere bei den o.g. beispielhaften Verfahren Vorteile mit sich bringt. Die Erfindung kann sowohl in bestehende als auch in neue Laseranlagen integriert werden. Durch die weitere Optimierung der Laserprozesse mithilfe der Erfindung wird das Einsatzfeld von Laserbearbeitung erweitert. Die Bearbeitungsqualität steigt, die Prozessdauer sinkt. Vorteilhaft ist die Modularität und die Flexibilität des Systems: Es kann in unterschiedlichen Anlagen und Laserbearbeitungssystemen eingesetzt werden, ohne starke Abhängigkeit von der Anwendung der entsprechenden Anlage. Aber auch schon bestehende Laseranlagen können u.U. mit der Technik nachgerüstet werden. Ggf. kann die vorgestellte strahlprofildrehende Optik in Scannersysteme integriert werden, wodurch die Funktionalität von modernen Scannern erhöht wird. Die Erhöhung der Produktivität von Laseranlagen durch die zielgerichtete Rotation von geformten Strahlprofilen ist bei Großserienproduktionen von großem Interesse und Wichtigkeit. Durch die hohe Flexibilität ist die Erfindung aber auch für die Produktion von Kleinserien oder Einzelstücken von höchster Relevanz.

Die die Vorrichtung betreffende Aufgabe wird durch eine Laserbearbeitungsanlage nach Anspruch 6 gelöst und zwar dadurch gelöst, dass die mindestens eine Prozesssteuereinheit Einrichtungen zur Durchführung des Verfahrens, wie es zuvor mit seinen Varianten beschrieben wurde, und die Laserbearbeitungsanlage zusätzlich eine strahlprofildrehende Optik zur Anpassung der Laserstrahlorientierung sowie ein Strahlformungsmodul zur Anpassung der Intensitätsverteilung aufweist. Damit lässt sich ein modulares Laserbearbeitungskonzept realisieren. Auch bestehende Laserbearbeitungsanlagen lassen sich damit nachrüsten. Eine Offline-Integration der Funktionalität ermöglicht eine Erweiterung von bestehenden Anwenderprogrammen zur Laserbearbeitung. Eine Online-Integration ermöglicht zudem die prozessorientierte Optimierung der Laserbearbeitung, bei der über entsprechende Schnittstellen zur Laserprozesssteuerung oder -regelung die Ansteuerung der Strahlformung bzw. - drehung erfolgt.

In bevorzugter Ausführungsform weist das Strahlformungsmodul mindestens eine SLM-Einheit in Form einer Phasen- und/ oder Amplitudenmodulationseinheit auf. Eine Strahlformung mittels einer Phasenmodulation kann vorteilhaft mittels einer LCoS-SLM-Einheit (Liquid Crystal on Silicon) erfolgen, bei dem mittels eines Arrays von doppelbrechenden Flüssigkristallen die Phase des einfallenden Laserstrahls diskretisiert werden kann, indem jedes Pixel eine unterschiedlich ansteuerbare Winkelausrichtung der Flüssigkristalle aufweist. Hiermit kann eine hochauflösende, schnelle und flexible Änderung der Phase im Rohstrahl ermöglicht und die Änderung der Laserleistungsdichteverteilung in einer Bearbeitungsebene nach einer Fouriertransformation mittels eines Linsensystems angepasst werden. Eine Strahlformung mit Hilfe einer Amplitudenmodulation kann mittels einer DMD-Einheit (Digital Micromirror Device) im Strahlformungsmodul erfolgen. Dabei diskretisiert ein Array von einzeln ansteuerbaren Mikrospiegeln den einfallenden Laserstrahl durch die Aufteilung in viele kleine Teilstrahlen, womit durch die unterschiedliche Ablenkung der Einzelstrahlen die Intensitätsverteilung des Laserstrahls in der Bearbeitungsebene angepasst werden kann. Hierbei wird das einfallende Licht teilweise wieder direkt zurück reflektiert, was bei einer horizontalen Spiegelstellung erfolgt, oder teilweise durch Kippung der Mikrospiegel aus dem Strahlenbündel ausgeschnitten.

Eine Anpassung der Laserstrahlorientierung erfolgt gemäß der vorliegenden Erfindung dadurch, dass die strahlprofildrehende Optik aus mehreren um die optische Achse drehbaren Prismen in Form von strahlprofildrehenden Prismen, und zwar Dove-Prismen und/ oder Zylinderlinsenteleskopen ausgebildet ist, wobei die Prismen und/ oder Zylinderlinsenteleskope gegenläufig drehbar angeordnet sind. Mit Dove-Prismen und/ oder Zylinderlinsenteleskopen kann die Strahlorientierung um den Winkel 2*α gedreht werden, wenn das Dove-Prisma und/ oder das Zylinderlinsenteleskop um den Winkel α gedreht wird. Durch Hintereinanderschaltung von N Dove-Prismen und/ oder Zylinderlinsenteleskopen kann bei gleichläufigem Drehsinn um den Winkel α eine Strahlprofildrehung um einen Winkel von N*2*α erreicht werden. Damit lassen sich sehr schnelle Winkelanpassungen mit hoher Dynamik erreichen. Bei sich gegenläufig drehenden Dove-Prismen und/ oder Zylinderlinsenteleskopen erfolgt eine Drehung des Laserstrahls um das 2-fache der Differenzwinkelgeschwindigkeit. Vorteilhaft ist hierbei, dass die Dove-Prismen und/ oder Zylinderlinsenteleskopen sich mehr oder minder konstant drehen und für eine Strahlprofildrehung lediglich geringfügig die Winkelgeschwindigkeit eines der sich drehenden Dove-Prismen und/ oder Zylinderlinsenteleskope abgebremst oder beschleunigt werden muss. Dadurch kann einerseits eine große Dynamik und anderseits auch eine hohe Präzision der Anpassung der Laserstrahlorientierung erreicht werden.

Die Erfindung wird im Folgenden anhand eines in den Figuren dargestellten Ausführungsbeispiels näher erläutert. Es zeigt:
Figur 1 in einer schematischen Blockdarstellung eine Laserbearbeitungsmaschine,
Figur 2 in einer weiteren schematischen Darstellung eine Laserbearbeitungsmaschine,
Figur 3a bis 3c in schematischer Darstellung eine Schweißung verschiedener Bauteile,
Figur 4 eine strahlprofildrehende Optik mit einem rotierenden Prisma,
Figur 5 eine strahlprofildrehende Optik mit einem Zylinderlinsenteleskop und
Figur 6 eine strahlprofildrehende Optik mit mehreren hintereinandergeschalteter Prismen, welche die vorliegende Erfindung darstellt.

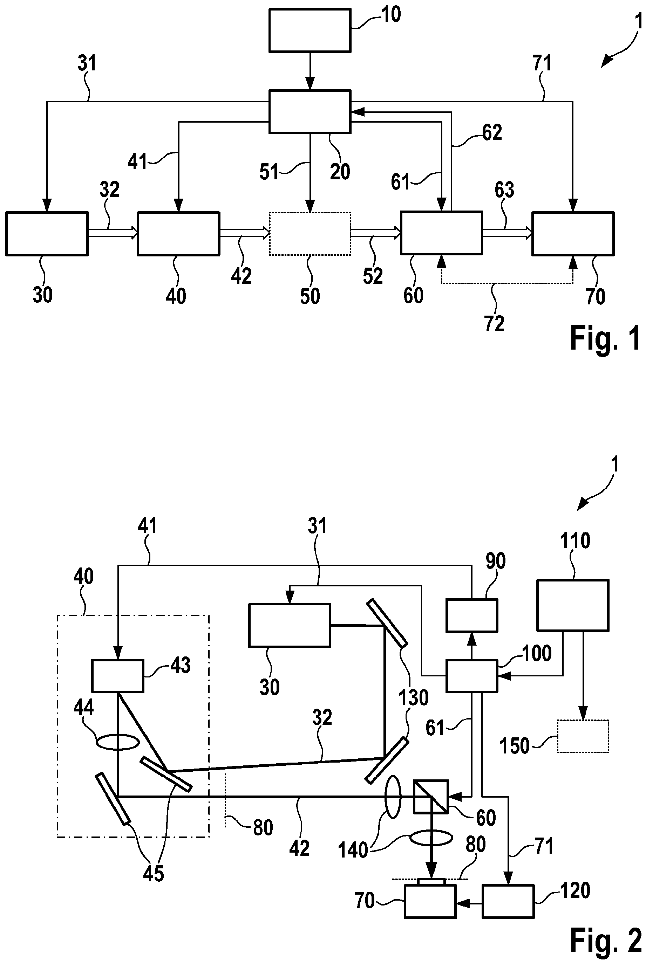

Figur 1 zeigt in einer schematischen Blockdarstellung eine Laserbearbeitungsmaschine 1, welche als Hauptkomponente eine Prozesssteuereinheit 20 aufweist, welche von einem Anwenderprogramm 10 entsprechende Vorgaben zur anstehenden Laserbearbeitung erhält. Die Prozesssteuereinheit 20 steuert über eine Vorgabe von Laserparametern 31, wie beispielsweise Laserleistung, On/Off-Status sowie eine Repetitionsrate, Pulsdauer und Pulsenergie bei gepulsten Lasern, eine Laserquelle 30, z.B. einen CO₂-Laser oder Nd:YAG-Laser, an. Der Laserstrahl 32 der Laserquelle 30, welcher üblicherweise ein symmetrisches Gaußprofil emittiert, wird in einem Strahlformungsmodul 40 entsprechend der zu bearbeitenden Oberfläche des zu bearbeitenden Werkstückes hinsichtlich seiner Intensitätsverteilung modifiziert, wobei von der Prozesssteuereinheit 20 eine Vorgabe der Strahlformung 41 erfolgt. Hier werden beispielsweise eine Intensitätsverteilung I_{(x,y,z,t)} und bei gepulsten Lasern eine Fluenzverteilung Φ_{(x,y,z,t)} vorgegeben.

Die Strahlformung kann beispielsweise mittels sogenannter Liquid Crystal on Silicon Spatial Light Modulatoren (LCoS-SLM) geschehen. Hierbei kann durch ein Array von doppelbrechenden Flüssigkeitskristallen die Phase des einfallenden Laserstrahls 32 durch unterschiedliche Anstellung jedes einzelnen Pixels diskretisiert werden. Eine andere Möglichkeit der Strahlformung kann mittels eines Digital Micromirror Device (DMD) erreicht werden, wobei ein Array von Mikrospiegeln der einfallende Laserstrahl 32 durch die Aufteilung in viele kleine Teil-Strahlen diskretisiert werden kann, womit der Laserstrahl 32 durch eine Ablenkung der Einzelstrahlen in der Bearbeitungsebene geformt werden kann. Ein derart geformter Laserstrahl 42 kann ohne weiteres Prozessieren zur Laserbearbeitung genutzt werden.

Zur Erzielung einer optimalen Laserbearbeitung ist weiterhin eine strahlprofildrehende Optik 50 vorgesehen, welche entsprechend einer Vorgabe der Strahlprofildrehung 51 (z.B. eine Winkelvorgabe für die Strahlprofildrehung bzw. einer Drehgeschwindigkeit) von der Prozesssteuereinheit 20 einen geformten und gedrehten Laserstrahl 52 erzeugt, der einem Scannersystem 60 zugeführt wird, welches über entsprechende Vorgaben der Scanparameter 61 (Scanprogramm bzw. Scanbahnen) von der Prozesssteuereinheit 20 angesteuert wird. Damit kann die relative Position zwischen dem geformten und gedrehten Laserstrahl 52 und dem Werkstück im Raum verändert werden, womit ein positionierter, geformter und gedrehter Laserstrahl 63 resultiert. Üblicherweise wird diese Funktion durch das Scannersystem 60 im Zusammenspiel mit einer Bauteilpositionierung 70 mittels XYZαβγ-Achsen realisiert. Das Scannersystem 60 wird dabei aufgrund der kleineren bewegten Massen für eine wesentlich größere Bewegungsgeschwindigkeit genutzt. In jedem Fall muss die Dynamik der strahlprofildrehenden Optik 50 und die des Strahlformungsmoduls 40 sowohl der Dynamik des Scannersystems 60 als auch des Positioniersystems entsprechen. Soll das Strahlprofil relativ zum Bauteil verdreht werden, so kann auch das Bauteil relativ zum Strahlprofil gedreht werden. Dies kann mithilfe eines präzisen Achssystems zur Positionierung des Bauteils erreicht werden. Somit entfällt die Notwendigkeit einer speziellen strahlprofildrehenden Optik 50. Allerdings kann es vorkommen, dass ein Achssystem je nach Anwendung und Bauteilgröße nicht die gewünschte bzw. notwendige Dynamik erreichen kann. Weiterhin kann vorgesehen sein, dass ggf. eine Fokussierung mithilfe der Bauteilpositionierung 72 erfolgt. Zudem kann eine Rückmeldung für Scanposition bzw. Scangeschwindigkeit 62 vorgesehen sein.

Fig. 2 zeigt in einer weiteren schematischen Darstellung eine Laserbearbeitungsanlage 1, bei der lediglich eine Strahlformung zur optimalen Laserbearbeitung vorgesehen ist, welche aber auch mit strahlprofildrehenden Optiken 50 ergänzt werden kann (in Figur 2 nicht dargestellt).

Von der Laserstrahlquelle 30 wird der Laserstrahl 32 über Umlenkspiegel 130 dem Strahlformungsmodul 40 zugeführt, welches den Laserstrahl über einen oder mehrere weitere Umlenkspiegel 45 auf eine SLM-Einheit 43, wie sie eingangs beschrieben wurde, lenkt. Der Laserstrahl 32 wird durch diesen Phasen- oder Amplitudenmodulator, bei dem eine Phasen- oder Amplitudenmaske moduliert wird, und welcher durch Vorgabe der Strahlformung 41 aus einer Strahlprofil-Datenbank 90 angesteuert wird, zu einem geformten Laserstrahl 42 modifiziert. Dabei kann vorgesehen sein, dass der geformte Laserstrahl 42 weitere Linsensysteme 44 durchläuft bzw. mittels weiterer Umlenkspiegel 45 umgelenkt wird.

Der geformte Laserstrahl 42 kann dabei in einer ersten Bearbeitungsebene 80 genutzt werden oder durchläuft ein weiteres Linsensystem 140 als Fokussierlinse und kann mit einem Scannersystem und weiteren Linsensystemen 140 auf eine weitere Bearbeitungsebene 80 projiziert werden. Die Positionierung kann dabei über die Bauteilpositionierung 70 erfolgen, die über eine Achsensteuerung 120 angesteuert wird.

Eine Master-Programmeinheit 100 steuert die Vorgabe der Laserparameter 31 für die Laserstrahlquelle 30, über die Strahlprofil-Datenbank 90 die Form das Laserstrahls 32, sowie das Scannersystem 60 und die Achsensteuerung 120. Eine zentrale Recheneinheit 110 synchronisiert dabei alle Subsysteme z.B. zeitbasiert oder ereignisbasiert zum Abarbeiten eines festen Programms oder für eine Prozessregelung, bei der eine zusätzliche Sensorik 150 bzw. Messtechnik in die Laserbearbeitungsanlage 1 integriert ist. Auf dieser zentralen Recheneinheit 110 kann ein Master-Code ausgeführt werden. Es können auch z.B. ein FPGA-Board, eine Grafikkarte oder sonstige echtzeitfähige Hardware-Systeme als Recheneinheit 110 verwendet werden. In einer alternativen Konfiguration kann auch ein Master-Slave-System mit Laser- und Scannersteuerkarte (RTC-Karte) als Master und weitere Komponenten als Slaves zum Abarbeiten eines festen Programms vorgesehen sein. Die Recheneinheit 110 kann als Host für eigenständige Systeme ausgeführt sein.

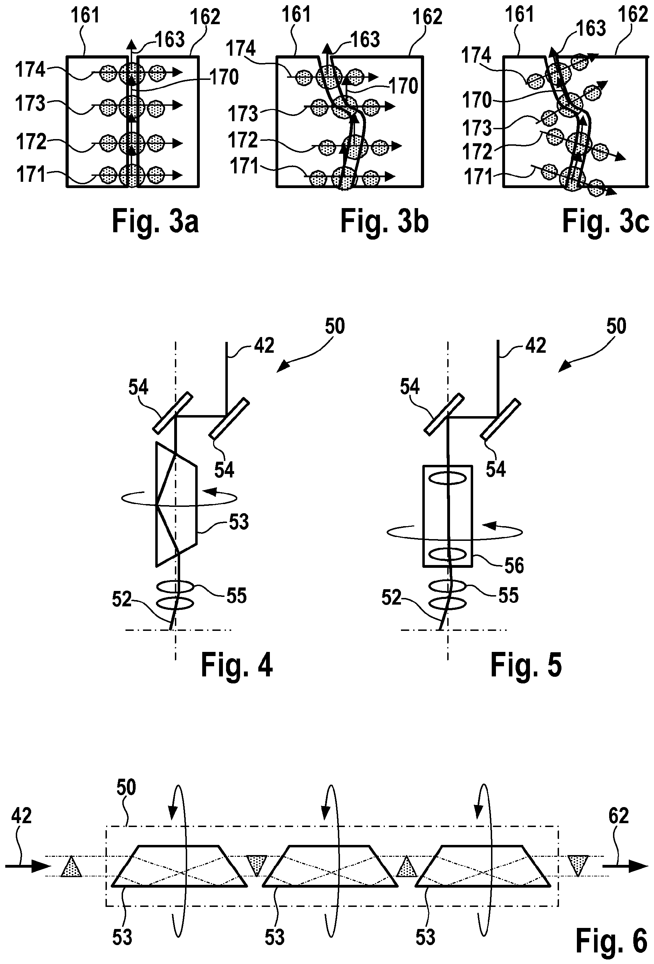

In Figur 3a, 3b und 3c sind in einer schematischen Darstellung zwei Schweißaufgaben vorgestellt. In Figur 3a soll ein gerade verlaufender Fügespalt 163 zwischen zwei Bauteilen, Bauteil 1 161 und Bauteil 2 162, zugeschweißt werden. Dies geschieht im gezeigten Bespiel mithilfe eines in der Bearbeitungsebene verteilten Strahlprofils (hier ein 3-Spot-Strahl). Da sich die Laserstrahl-Vorschubrichtung 170 während verschiedener Zeitpunkte 171, 172, 173, 174 nicht ändert, muss auch das Strahlprofil nicht gedreht werden. Ändert sich jedoch die Vorschubrichtung des Laserstrahls/ der Bauteile 161, 162 während verschiedener Zeitpunkte 171, 172, 173, 174, wie dies in Figur 3b und 3c dargestellt ist, um dem ungeraden Fügespalt 163 zu folgen, so ist es von Vorteil, wenn auch das Strahlprofil mitgedreht werden kann. Der Unterschied zwischen der Nicht-Drehung und der Drehung des Strahlprofils ist in den Figuren 3b und 3c dargestellt. Figur 3b zeigt die Situation ohne Strahlprofildrehung. Figur 3c zeigt einen optimierten Schweißprozess, bei dem das Strahlprofil entsprechend dem Verlauf des Fügespaltes 163 gedreht wird.

Eine einfache Lösung zur Drehung des Strahlprofils in der Bearbeitungsebene, ist durch die Drehung des Strahlprofilformers (z.B. des DEOs) selbst um die Strahlausbreitungsachse gegeben. Vorausgesetzt, der einfallende Strahl ist perfekt kreissymmetrischer Natur, so wird durch die Drehung des Strahlformers in der XY-Ebene auch das Strahlprofil rotiert. Zu den Vorteilen eines solchen Aufbaus zählt die Einfachheit - zusätzlich zum Strahlformer an sich und eines Mechanismus, der ihn um die Z-Achse dreht, kommen keine weiteren Optiken hinzu. Außerdem sind viele Strahlprofilformer, wie DOEs, klein und leicht und eignen sich somit sehr gut für hochdynamische optomechanische Aufbauten. Allerdings hängt die Qualität der Strahlformung stark von dem Eingangsstrahl ab. Ist dieser nicht perfekt kreissymmetrisch, so wird das in der Bearbeitungsebene abgebildete Strahlprofil bei der Drehung des Strahlprofilformers nicht nur mitgedreht, sondern auch verzerrt.

Ist ein Strahlprofil bereits geformt, so kann seine Abbildung in der Bearbeitungsebene z.B. mit einer Optik auf Basis eines Dove-Prismas 53 gedreht werden. Beim Durchlaufen eines Dove-Prismas erfährt ein Strahlprofil eine Drehung um 180° um die Z-Achse = Strahlachse). Wird das Dove-Prisma um einen Winkel α gedreht, so dreht sich das Strahlprofil am Ausgang um einen Winkel 2*α. Figur 4 zeigt eine strahlprofildrehende Optik 50 auf Basis eines Dove-Prismas 53. Der bereits geformte Laserstrahl 42 wird bei dem gezeigten Ausführungsbeispiel mittels Umlenkspiegel 54 in das drehbare Dove-Prisma 53 eingekoppelt. Der bereits geformte Laserstrahl 42 wird bei Durchlaufen des Dove-Prismas entsprechend der o.g. Bedingung um den Winkel 2*α bei Drehung des Dove-Prismas um den Winkel α gedreht. Der geformte und gedrehte Laserstrahl 52 verlässt die strahlprofil-drehende Optik 50 über ein Linsensystem 55.

Figur 5 zeigt schematisch eine alternative Möglichkeit einer Strahlprofildrehung basierend auf der Verwendung eines Zylinderlinsenteleskops 56. Der bereits geformte Laserstrahl 42 wird bei dem gezeigten Ausführungsbeispiel mittels Umlenkspiegel 54 in das drehbare Zylinderlinsenteleskop 56 eingekoppelt. Der geformte und gedrehte Laserstrahl 52 verlässt die strahldrehende Optik 50 über ein Linsensystem 55.

Hierbei sei angemerkt, dass die in Figur 4 und 5 gezeigten Anordnungen nur jeweils eine mögliche Anordnung zeigen. Beim Bohren beispielsweise werden der Umlenkspiegel 54 für den Wendeldurchmesser und den Anstellwinkel verdreht. Da hier nur die Strahlprofildrehung benötigt wird, kann der Strahl auch ohne Auslenkung und Verkippung, also einfach gerade in das Dove-Prisma 53 oder in das Zylinderlinsenteleskop 56 eingekoppelt werden. Dann kommt der Strahl auch gerade wieder heraus. Das Linsensystem 55 ist dann ebenfalls für diese Anwendung nicht notwendig, da noch weitere optische Elemente bis zur Bearbeitungsebene folgen.

Das Strahlprofil eines Strahls, der durch ein Zylinderlinsenteleskop 56 verläuft, wird ähnlich wie bei Dove-Prisma 53 gedreht. Wird das Teleskop um den Winkel ϕ gedreht, so dreht sich das Strahlprofil um den Winkel 2*ϕ. Die bei dem Dove-Prisma-Aufbau erläuterten Möglichkeiten zur Erhöhung der Systemdynamik und der Strahlprofilverdrehgeschwindigkeit können auch auf den Aufbau mit dem Zylinderlinsenteleskop 56 übertragen werden. Somit sind gemäß der vorliegenden Erfindung mehrere Teleskope nacheinander angeordnet werden, um den Proportionalitätsfaktor zwischen der Verdrehung des Strahlprofils und des Zylinderlinsensystems zu vergrößern. Es können zudem auch z.B. zwei Teleskope gegenläufig rotiert werden, um die Strahlprofildrehung mit dem Prinzip des Differenzenwinkels zu erzielen, wobei gerade das gegenläufige Rotieren die Erfindung darstellt.

Durch die Reihenschaltung eines Strahlformers und eines um seine Z-Achse rotierenden Dove-Prismas 53 kann somit das geformte Strahlprofil gedreht werden. Dadurch, dass die Strahlprofildrehung mit der doppelten Winkelgeschwindigkeit der Drehung des Prismas erfolgt, können höhere Strahlprofildrehgeschwindigkeiten erreicht werden. Zur weiteren Steigerung der Strahlprofildrehgeschwindigkeiten ist ein Aufbau denkbar, bei dem N hintereinander geschaltete Dove-Prismen 53 verbaut sind, wie diese erfindungsgemäße Figur 6 zeigt. Wird der gesamte Aufbau um den Winkel α gedreht, so dreht das Strahlprofil um den Winkel 2*N*α. Zu beachten bei solch einem Aufbau ist jedoch, dass mit jedem hinzugeschalteten Prisma das Gesamtgewicht des Systems steigt und die Dynamik sinkt.

Da eine wichtige Anforderung an die strahlprofildrehende Optik die schnelle Umkehrung der Verdrehrichtung des Strahlprofils ist, muss das System über eine hohe Dynamik verfügen. Für das schnelle Umkehren des Drehsinns des Strahlprofils ist ein Aufbau vorstellbar, der auf dem Differenzenprinzip basiert: Wenn gemäß der vorliegenden Erfindung zwei Prismen oder zwei aus mehreren Prismen bestehende Systeme mit derselben Geschwindigkeit rotiert werden, jedoch ihre Rotationen in umgekehrte Richtungen zeigen, so wird das Strahlprofil nur um den doppelten Differenzwinkel zwischen den beiden konstant drehenden Prismenschaltungen eingestellt. Soll dieser Anstellwinkel verändert werden, so müssen die rotierenden Systeme nicht bis zum Stillstand abgebremst werden. Ausschließlich ihr Differenzwinkel muss durch eine leichte Abbremsung des einen oder Beschleunigung des anderen Systems eingestellt werden. Durch die Verwendung dieses Prinzips sind auch hohe Dynamiken des Gesamtsystems möglich, obwohl mehrere Prismen und somit mehr Gewicht eingesetzt werden. Anzumerken ist, dass außer Dove-Prismen auch weitere Typen von Prismen verwendet werden können, wie z.B. das Porro-Prisma. Die beiden beschriebenen Varianten der Hintereinanderschaltung von rotierenden optischen Elementen zur Strahlprofildrehung mit gleichem oder entgegengesetztem Drehsinn sind auch auf den Aufbau mit dem Zylinderlinsenteleskop 56 übertragbar, wobei lediglich der entgegengesetzte Drehsinn die Erfindung darstellt.

Die Intensitätsverteilung des aus der Laserstrahlquelle 30 austretenden Laserstrahls 32 wird mit einem programmierbaren Strahlformungsmodul 40 variiert und durch einen optischen Aufbau auf das Bauteil 161, 162 abgebildet bzw. fokussiert. Als Strahlformer können Phasen-, Amplitudenmodulatoren oder eine Reihenschaltung (ggf. auch Parallelschaltung) aus solchen verwendet werden. Die Auswahl der geeigneten Strahlformer hängt stark von der Anwendung, den Rahmenbedingungen und von der sonstigen Systemtechnik ab. Die Strahlform wird an unterschiedliche Anforderungen angepasst, die sich zum einen aus dem Laserprogramm / Anwenderwünschen und zum anderen aus dem Ausgleich von Abbildungsfehlern auf der Bearbeitungsebene (z.B. Bildverzug im Scannerfeld, Abbildungsfehler des optischen Systems usw.) ergeben.

Da die Berechnung der Strahlformen meist viele Rechenoperationen erfordert, kann vor dem Start des Bearbeitungsvorgangs eine Datenbank an zu den Strahlformen passenden Masken abgelegt werden, auf die während des Prozesses zugegriffen werden kann. Der in Figur 1 vorgestellte schematische Aufbau der Ansteuerung der Strahlform basiert auf solch einer Offline-Berechnung der Strahlformen. Obwohl die Prozesstechnik bei unterschiedlichen Lasermaterialbearbeitungsprozessen oft sehr verschieden ist, kann die vorgestellte Erfindung bei vielen Prozessen zum Einsatz kommen und zur Prozessoptimierung verwendet werden.

Beim Lasermaterialabtrag kann z.B. die Intensitätsverteilung des Strahls an die Abtrags- oder Bauteilgeometrie bzw. an die Ausrichtung einer Schweißnaht angepasst werden, wie dies insbesondere in Figur 3c am Beispiel einer Verschweißung gezeigt ist. Die Drehung des Strahlprofils während der Bearbeitung kann dabei sowohl von der vorgestellten Erfindung als auch von einem zusätzlichen Modul gesteuert werden.

Soll eine Fläche abgetragen werden, so kann ihre positionsgenaue Belichtung mit dem Laser auch mit der Strahlformung erfolgen. Die zu belichtende Fläche wird direkt als Intensitätsverteilung des Laserstrahls 32 dargestellt. Im Falle, wenn die Intensität der Strahlform nicht ausreicht, um das gewünschte Abtragsergebnis zu erhalten, kann die zu belichtende Fläche in (mindestens zwei) Subareale aufgeteilt werden, die ebenfalls in die Intensitätsverteilung konvertiert werden. Dann sollen die Subareale alternierend nacheinander belichtet werden, wobei das Strahlformungssystem vorgibt, welches Areal wann belichtet wird. Solche Bearbeitung hat zudem den Vorteil, dass durch die Alternierung der Strahlprofile genug Zeit zur Abkühlung der Flächen bleibt, die gerade nicht bearbeitet werden.

Beim Bohren kann die Strahlform in Abhängigkeit von der Geometrie des Bohrlochs und des Bauteils 161, 162 wie auch von der Tiefe geändert bzw. an diese angepasst werden. Vor allem beim Ausformen der Bohrlöcher kann die Geometrie des Strahlprofils eine entscheidende Rolle spielen. Da die Intensitätsverteilung auch entlang der Z-Achse variiert werden kann, kann das System auch zur Fokuseinstellung verwendet werden.

Beim Schweißen kann die flexible Strahlformung dazu verwendet werden, die Intensitätsverteilung an die Bauteildicke oder unterschiedliche zu schweißende Materialien anzupassen. Ferner kann die Strahlformung im Gegensatz zu einfachem Gaußprofil flexibler zur Ausformung der Schweißnaht, zur Vermeidung der Rissbildung usw. eingesetzt werden.

In Abgrenzung von offline erstellten Programmen zur Strahlformänderung während der Laserbearbeitung ist es auch denkbar, dass Laserbearbeitungsprozesse in Zukunft automatisierter ablaufen werden, wobei eine Vorvermessung und Zwischenvermessungen von Bauteilen zum Bearbeitungsprozess dazugehören könnten. In diesem Fall können mithilfe von automatisierten Algorithmen auch die optimierten Strahlformen während der Bearbeitung selbst generiert werden. Die unterschiedlichen Strahlformen können aber auch aus einer Datenbank in Echtzeit bezogen werden. Die Erfindung soll also imstande sein, in Echtzeit auf Änderung der Systemparameter zu reagieren und die Strahlform entsprechend anzupassen.

Durch Integration von Subsystemen zur Erfassung und Auswertung von unterschiedlichen Sensorwerten und Prozessparametern wird die Erfindung in die Lage versetzt auf Änderungen der Sensor- und Prozessparameterwerte mit einem Regeleingriff in die Strahlform und Strahlausrichtung zu reagieren. Durch die Änderung der Strahlform und Strahlausrichtung können während des Prozesses solche Parameter wie örtliche und zeitliche Intensitätsverteilung bzw. Fluenzverteilung direkt, wie auch Pulsüberlapp (bei gepulsten Lasern) indirekt geändert werden. Die Regelung der Strahlform und Strahlausrichtung kann in Abhängigkeit von unterschiedlichen Parametern geschehen, weswegen das Gesamtsystem mehrere unterschiedliche Messsysteme beinhaltet. Die möglichen Regelparameter sind:
- Bauteiltemperatur (lokal am und um Bearbeitungsstelle und global)
- Geometrie (z.B. beim Laserabtrag oder Bohren)
- Absolute Lage vom zu bearbeitenden Bauteil
- Relative Lage von mehreren Bauteilen zueinander oder relativ zum Werkzeug
- Rauheit des Bauteils.

Die Anwendungsgebiete für die zuvor beschriebenen Konzepte sind vielfältig. Prinzipiell kann diese Methode zur Variierung eines weiteren Prozessparameters - der Strahlform und der Orientierung - bei allen bekannten Laserbearbeitungsprozessen eingesetzt werden: Laserschweißen, Laserpolieren, Laserabtragen, Markieren, Bohren, Lasersäubern usw. Vor allem bei der Materialbearbeitung mit Ultrakurzpulslaser kann dies zu einer wesentlichen Steigerung der Produktivität, der Qualität und der Genauigkeit führen. Die heutzutage verfügbaren aber nicht ausgenutzten hohen Laserleitungen können mithilfe der Erfindung tatsächlich umgesetzt werden.

Bestehende Laserbearbeitungsanlagen 1 können mit den zuvor beschriebenen Systemkomponenten erweitert bzw. nachgerüstet werden. Man erhält damit ein modulares und insbesondere flexibles System, welches optimal an die Bearbeitungsaufgabe angepasst werden kann.

## Patentansprüche

1. Verfahren zur Strahlformanpassung und Strahlprofildrehung bei einem Laserbearbeitungsprozess,
• bei dem in einer Laserbearbeitungsanlage (1) ein Laserstrahl (32) mittels Umlenkspiegeln (130) und Linsensystemen (140) auf die Oberfläche eines Bauteils (161, 162) fokussiert,
• der Laserstrahl (32) mittels mindestens eines Strahlformungsmoduls (40) hinsichtlich seiner Intensitätsverteilung an die zu bearbeitende Oberfläche des Bauteils (161, 162) angepasst wird,
• der Laserstrahl (32) hinsichtlich seiner Orientierung mittels einer strahlprofildrehenden Optik (50) während der Bearbeitung gedreht wird,
• die Strahlform sowie die Drehung des Strahlprofils des Laserstrahls (32) abhängig von der zu bearbeitenden Fläche des Bauteils (161, 162) als auch vom Vorschubvektor der Bearbeitungsgeschwindigkeit angepasst werden, und
• die Strahlformanpassung des Laserstrahls (32) mittels einer Spatial Light Modulator-Einheit (43) im Strahlformungsmodul (40) durchgeführt wird, wobei
• die Strahlprofildrehung mittels sich gegenläufig drehenden Dove-Prismen (53) und/oder Zylinderlinsenteleskopen (56) eingestellt wird.

2. Verfahren nach Anspruch 1, wobei die Strahlformanpassung und Strahlprofildrehung des Laserstrahls (32) frei programmiert oder in Abhängigkeit einer Scannersteuerung eines Scannersystems (60) und/ oder einer Positionierachsensteuerung einer Bauteilpositionierung (70) adaptiert wird.

3. Verfahren nach Anspruch 1 oder 2, wobei Prozessparameter für die Strahlformanpassung und Strahlprofildrehung des Laserstrahls (32) offline in Laserbearbeitungsprogramme integriert oder online an den Laserbearbeitungsprozess adaptiert werden.

4. Verfahren nach einem der Ansprüche 1 bis 3, wobei die Strahlformanpassung und Strahlprofildrehung des Laserstrahls (32) kontinuierlich oder in kurzen Zeitabständen während des Prozesses durchgeführt wird.

5. Verwendung des Verfahrens nach einem der Ansprüche 1 bis 4 in Laserbearbeitungsanlagen (1) zum Laserabtragen, Laserbohren, Lasermarkieren, Laserlöten bzw. Laserschweißen, Laserreinigen und zum Laserpolieren.

6. Laserbearbeitungsanlage (1), welche mindestens eine Prozesssteuereinheit (20), eine Laserstrahlquelle (30), ein Strahlformungsmodul (40) sowie ein Scannersystem (60) und eine Bauteilpositionierung (70) umfasst, wobei ein Laserstrahl (32) aus der Laserstrahlquelle (30) mittels Umlenkspiegel (130) und Linsensystemen (140) auf die Oberfläche eines Bauteils (161, 162) fokussierbar ist und der Laserstrahl (32) mittels des Strahlformungsmoduls (40) hinsichtlich seiner Intensitätsverteilung an die zu bearbeitende Oberfläche des Bauteils (161, 162) anpassbar ist, wobei von einem Anwenderprogramm (10) Laserbearbeitungsparameter vorgebbar sind, wobei die Laserbearbeitungsanlage (1) eine strahlprofildrehende Optik (50) zur Anpassung der Laserstrahlorientierung sowie ein Strahlformungsmodul zur Anpassung der Intensitätsverteilung aufweist, und wobei das Strahlformungsmodul (40) mindestens eine Spatial Light Modulator-Einheit (43) in Form einer Phasen- und/ oder Amplitudenmodulationseinheit aufweist, wobei
• die strahlprofildrehende Optik (50) aus mehreren um die optische Achse drehbaren Prismen in Form von Dove-Prismen (53) und/ oder Zylinderlinsenteleskopen (56) ausgebildet ist, wobei die Prismen und/ oder Zylinderlinsenteleskope (56) gegenläufig drehbar angeordnet sind, und
• die mindestens eine Prozesssteuereinheit (20) Einrichtungen aufweist, welche so konfiguriert sind, dass sie ein Verfahren nach einem der Ansprüche 1 bis 4 ausführen.

## Claims

1. Method of beam shape adjustment and beam profile rotation within a laser processing process,
• in which a laser beam (32) in a laser processing apparatus (1) is focused on the surface of a component (161, 162) by means of deflection mirrors (130) and lens systems (140),
• at least one beam shaping module (40) is used to adjust the laser beam (32) in terms of its intensity distribution to the surface of the component (161, 162) to be processed,
• during the processing the laser beam (32) is rotated in respect of its orientation by means of a beam profile-rotating optical unit (50),
• the beam shape and the rotation of the beam profile of the laser beam (32) are adjusted depending both on the area of the component (161, 162) to be processed and on the feed vector of the processing speed, and
• the beam shape adjustment of the laser beam (32) is implemented by means of a spatial light modulator unit (43) in the beam shaping module (40),
wherein
• the beam profile rotation is set by means of counterrotating dove prisms (53) and/or cylindrical lens telescopes (56).

2. Method according to Claim 1, wherein the beam shape adjustment and beam profile rotation of the laser beam (32) are freely programmed or adapted on the basis of a scanner control of a scanning system (60) and/or a positioning axis control of a component positioning means (70) .

3. Method according to Claim 1 or 2, wherein process parameters for the beam shape adjustment and beam profile rotation of the laser beam (32) are integrated offline into laser processing programs or adapted online to the laser processing process.

4. Method according to any of Claims 1 to 3, wherein the beam shape adjustment and beam profile rotation of the laser beam (32) are carried out continuously or at short time intervals during the process.

5. Use of the method according to any of Claims 1 to 4 in laser processing apparatuses (1) for laser ablation, laser drilling, laser marking, laser soldering or laser welding, laser cleaning and laser polishing.

6. Laser processing apparatus (1) comprising at least one process control unit (20), a laser beam source (30), a beam shaping module (40), and a scanning system (60) and a component positioning means (70), wherein a laser beam (32) from the laser beam source (30) is able to be focused on the surface of a component (161, 162) by means of deflection mirrors (130) and lens systems (140) and by means of the beam shaping module (40) the laser beam (32) is adjustable in terms of its intensity distribution to the surface of the component (161, 162) to be processed, wherein laser processing parameters are specifiable by a user program (10), wherein the laser processing apparatus (1) comprises a beam profile-rotating optical unit (50) for adjusting the laser beam orientation and a beam shaping module for adjusting the intensity distribution, and wherein the beam shaping module (40) comprises at least one spatial light modulator unit (43) in the form of a phase and/or amplitude modulation unit,
wherein
• the beam profile-rotating optical unit (50) is formed by a plurality of prisms in the form of dove prisms (53), which are rotatable about the optical axis, and/or cylindrical lens telescopes (56), wherein the prisms and/or cylindrical lens telescopes (56) are arranged to be rotatable counter to one another, and
• the at least one process control unit (20) comprises devices configured so that they carry out a method according to any of Claims 1 to 4.

## Revendications

1. Procédé d'adaptation de forme de rayon et de rotation de profil de rayon lors d'un processus d'usinage à laser,
• dans lequel, dans une installation d'usinage au laser (1), un rayon laser (32) est concentré sur la surface d'un composant (161, 162) au moyen de miroirs de renvoi (130) et de systèmes de lentilles (140) ,
• le rayon laser (32) est adapté à la surface à usiner du composant (161, 162) au moyen d'un module (40) de mise en forme de rayon pour ce qui concerne sa distribution d'intensité,
• le rayon laser (32) est tourné pendant l'usinage pour ce qui concerne son orientation au moyen d'une optique (50) de rotation de profil de rayon,
• la forme de rayon ainsi que la rotation du profil de rayon du rayon laser (32) sont adaptées en fonction de la surface à usiner du composant (161, 162) ainsi que du vecteur d'avancement de la vitesse d'usinage, et
• l'adaptation de la forme de rayon du rayon laser (32) est effectuée au moyen d'une unité (43) modulateur spatial de lumière dans le module (40) de mise en forme de rayon,
• la rotation du profil de rayon étant réglée au moyen de prismes de Dove (53) et/ou de télescopes à lentille cylindrique (56) qui tournent en sens inverse.

2. Procédé selon la revendication 1, l'adaptation de la forme de rayon et la rotation du profil de rayon du rayon laser (32) étant programmées librement ou adaptées en fonction d'une commande de balayage d'un système de balayage (60) et/ou d'une commande d'axe de positionnement d'un positionnement (70) de composant.

3. Procédé selon la revendication 1 ou 2, les paramètres de processus pour l'adaptation de la forme de rayon et la rotation du profil de rayon du rayon laser (32) étant intégrés hors ligne dans des programmes d'usinage au laser ou adaptés en ligne au processus d'usinage au laser.

4. Procédé selon l'une quelconque des revendications 1 à 3, l'adaptation de la forme de rayon et la rotation du profil de rayon du rayon laser (32) étant effectuées continuellement ou à des intervalles de temps courts pendant le processus.

5. Utilisation du procédé selon l'une quelconque des revendications 1 à 4 dans des installations d'usinage au laser (1) pour l'enlèvement au laser, le perçage au laser, le marquage au laser, le brasage au laser ou le soudage au laser, le nettoyage au laser et pour le polissage au laser.

6. Installation d'usinage au laser (1), laquelle comprend au moins une unité de commande (20) de processus, une source (30) de lumière laser, un module (40) de mise en forme de rayon ainsi qu'un système de balayage (60) et un positionnement (70) de composant, un rayon laser (32) provenant de la source (30) de lumière laser pouvant être concentré sur la surface d'un composant (161, 162) au moyen de miroirs de renvoi (130) et de systèmes de lentilles (140), et le rayon laser (32) pouvant être adapté à la surface à usiner du composant (161, 162) au moyen du module (40) de mise en forme de rayon pour ce qui concerne sa distribution d'intensité, des paramètres d'usinage au laser pouvant être prédéfinis par un programme d'utilisateur (10), l'installation d'usinage au laser (1) possédant une optique (50) de rotation de profil de rayon destinée à adapter l'orientation du rayon laser ainsi qu'un module de mise en forme de rayon destiné à l'adaptation de la distribution d'intensité, et le module (40) de mise en forme de rayon possédant au moins une unité (43) modulateur spatial de lumière sous la forme d'une unité de modulation de phase et/ou d'amplitude,
• l'optique (50) de rotation de profil de rayon étant constituée de plusieurs prismes pouvant tourner autour de l'axe optique sous la forme de prismes de Dove (53) et/ou de télescopes à lentille cylindrique (56), les prismes et/ou les télescopes à lentille cylindrique (56) étant montés à rotation en sens inverse, et
• l'au moins une unité (20) de commande de processus possédant des dispositifs qui sont configurés de telle sorte qu'ils mettent en œuvre un procédé selon l'une quelconque des revendications 1 à 4.
